Europäisches Patentamt

(19) European Patent Office

Office européen des brevets

(11) Numéro de publication: **0 017 522**
**B1**

(12) **FASCICULE DE BREVET EUROPEEN**

(45) Date de publication du fascicule du brevet: **23.11.83**

(51) Int. Cl.³: **A 47 J 37/04**

(21) Numéro de dépôt: **80400320.0**

(22) Date de dépôt: **11.03.80**

(54) Cheminée cinétique pouvant être utilisée comme rôtissoire.

(30) Priorité: **15.03.79 FR 7906545**

(43) Date de publication de la demande:
**15.10.80 Bulletin 80/21**

(45) Mention de la délivrance du brevet:
**23.11.83 Bulletin 83/47**

(84) Etats contractants désignés:
**AT BE CH DE GB IT LU NL SE**

(56) Documents cités:
**DE - A - 2 515 658**
**DE - A - 2 641 126**
**DE - C - 42 759**
**FR - A - 781 486**
**FR - A - 2 231 343**
**FR - A - 2 384 475**
**US - A - 2 482 601**

(73) Titulaire: **Geissmann, Robert**
**153 rue de l'Université**
**F-75007 Paris (FR)**

(72) Inventeur: **Geissmann, Robert**
**153 rue de l'Université**
**F-75007 Paris (FR)**

Courier Press, Leamington Spa, England.

Cheminée pouvant être utilisée comme rôtissoire

La présente invention a trait au domaine des dispositifs et installations destinés aux cheminées.

Elle concerne plus spécialement une cheminée portative ayant une triple utilisation: le chauffage, la cuisine en rotisserie et la décoration en tant que mobile sculptural. On a dé jà décrit et commercialisé de nombreux appareils à chauffer, à cuire et à rôtir ainsi que des types différents de cheminée (voir par exemple le brevet allemand No 42759 les brevets américains Nos 1 588 530; 2 181 847; 2 885 952; 3 009 410, 3 331 310 et, 3 604 341, ainsi que le brevet français No. 1 099 294). Beaucoup plus récemment, on a préconisé une nouvelle rotissoire destinée à cuire simultanément un grand nombre de pièces de viande sur des séries de broches verticales rotatives en cercle autour d'un foyer central. Cette rotissoir comprend essentiellement au centre d'une cage à panneaux de verre un foyer central rotatif autour duquel sont articulées des broches verticales à inclinaison variable actionnées par un moteur indépendant (voir brevets français déposés par le même demandeur et publiés sous les Nos 2 231 343 et 2 384 475).

Au cours de la réalisation des prototypes basés sur le principe de la rôtissoire susvisée ainsi que des études ultérieures, de nombreux et importants perfectionnements ont été apportées par le Demandeur et font l'objet de la présente invention.

La cheminée servant de base au dispositif perfectionné de l'invention comporte de façon connue du FR—A—2 384 475: un foyer porté par un plateau horizontal rotatif, le plateau étant solidaire d'un axe central disposé verticalement et pouvant être entraîné par un moteur, un socle portant à rotation le-dit plateau par l'intermédiaire d'un manchon, des bras disposés radialement sur le plateau, et portant chacun, à leur extrémité libre, un moteur pour l'entrainement en rotation des broches.

Conformément à ses principales caractéristiques, la cheminée perfectionnée selon l'invention est caractérisée en ce que: le plateau horizontal est constitué par deux plaques métalliques emprisonnant une matière isolante, les bras étant solidaires de la plaque inférieure, la plaque supérieure recevant le foyer, l'alimentation en courant électrique des moteurs d'entrainement des broches, se faisant au moyen de fils passant à travers les bras constitués par des tubes creux, le socle reposant sur un bac métallique protégeant l'alimentation électrique et comportant une ouverture amenant l'alimentation électrique au moteur actionnant l'axe central ainsi qu'à l'axe central lui même par l'intermédiaire d'un contacteur à bagues.

En pratique, les piliers télescopiques sont constitués par des tubes carrés disposés de façon angulaire les uns par rapport aux autres pour recevoir en appui latéral les panneaux de verre, lesquels coulissant dans des cornières inférieure et supérieure reliées aux piliers par des consoles démontables.

De nombreuses autres améliorations apparaitront dans la description qui suit, relative à des modes de réalisation non limitatifs, illustrés par les cinqu planches de dessins annexés.

Les figures représentent une cheminée à foyer rotatif transportable. La figure 1 représente un plan d'ensemble de la cheminée; les figures 2, 3, 4, 5 et 6 représentant différents composants du support-broche avec son axe, son moteur, ses tubes télescopiques, son récipient graisse: les figures 7 et 8 représentent les diverses broches; la figure 9 est une coupe de la cheminée; la figure 10 représente une aiguille faisant partie d'un des types de broche utilisée; la figure 11 représente les positionnements des tubes télescopiques par rapport à l'axe central; la figure 12 représente le positionnement des tubes soutenant les glaces et maintenant les piliers entre eux; la figure 13, représente le plateau isolant soutien du foyer et des cendriers; la figure 14, représente la positionnement des cendriers sur le plateau supérieur.

La constitution de base de la cheminée à foyer rotatif comprend un axe central 1 qui comporte à sa base un manchon élastique 2 qui évite les à coups tout en protégeant l'axe central et l'axe 3 du moteur central 17 des torsions co-axiales. Dans le moyeu inférieur de ce manchon on a inséré une roue libre 4 qui permet à l'arrêt comme en marche de faire tourner le système foyer et broches à grande vitesse par simple poussée afin d'intervenir rapidement en l'un des points circulaires, sans être obligé d'attendre les basses révolutions du moteur central 17.

A la partie supérieure de cet axe central est fixé un disque 5 ayant à sa partie inférieure un rondelle d'appui 21 qui portera sur la butée de soutien 12.

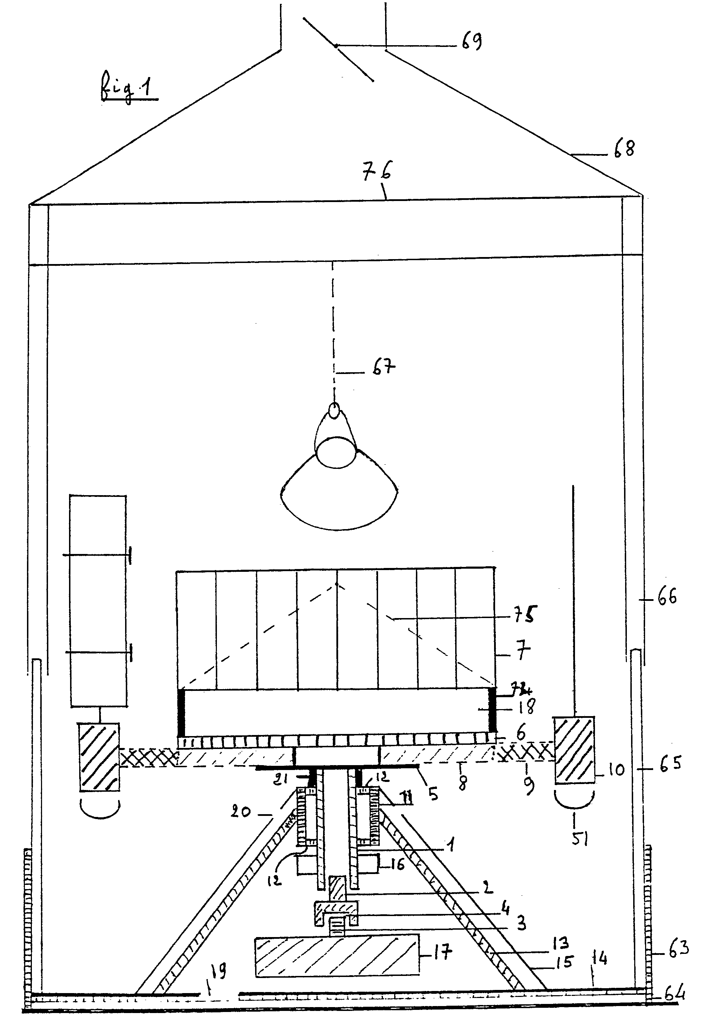

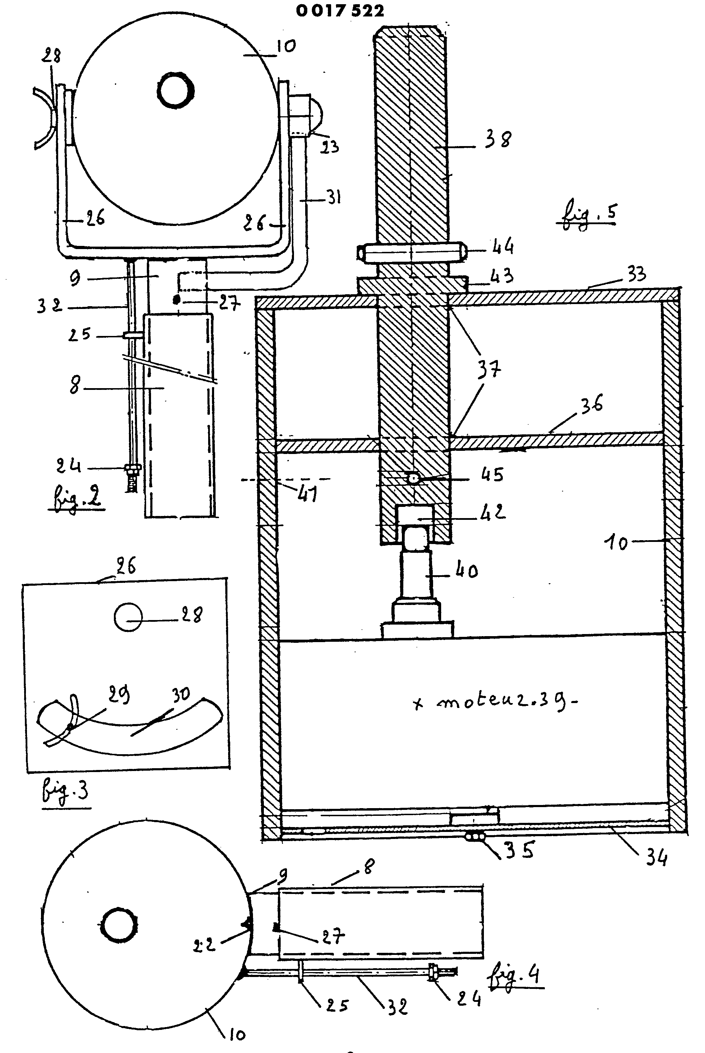

Entre ce disque 5 et un plateau 6 supportant un foyer 7 sont pris en sandwich par des soudures appropriées des tubes creux 8 comme indiqué dans la figure 2. Dans ces tubes crux fixes 8 coulisseront d'autres tubes creux 9 sur lesquels seront fixés des support-broches 10.

Tout cet ensemble est maintenu par une manchon 11 dans lequel on introduit l'axe 1 et par des bagues ou roulements afin d'assurer une rotation normale. Ce manchon est luimême soutenu soit par des pieds soit par un tronc de cône ou de pyramide 13, 15, constituant un socle, soit par les deux dans le cas où l'on utilise le tronc de cône comme protection, les tout s'appuyant sur un grand bac métallique 14 avec une fixation facilement démontable.

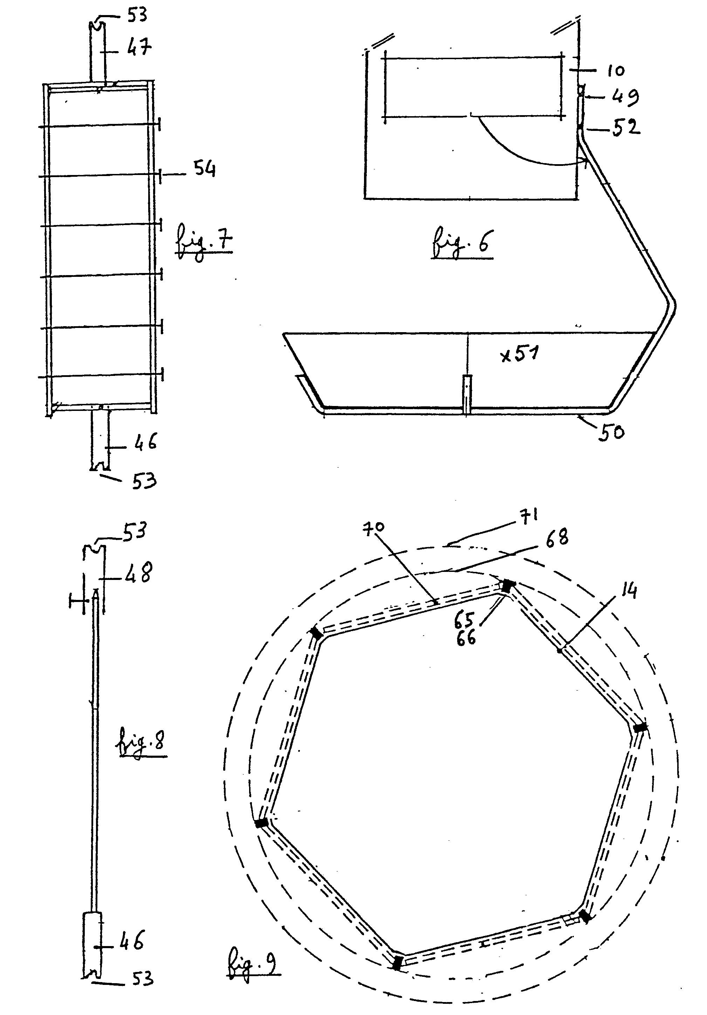

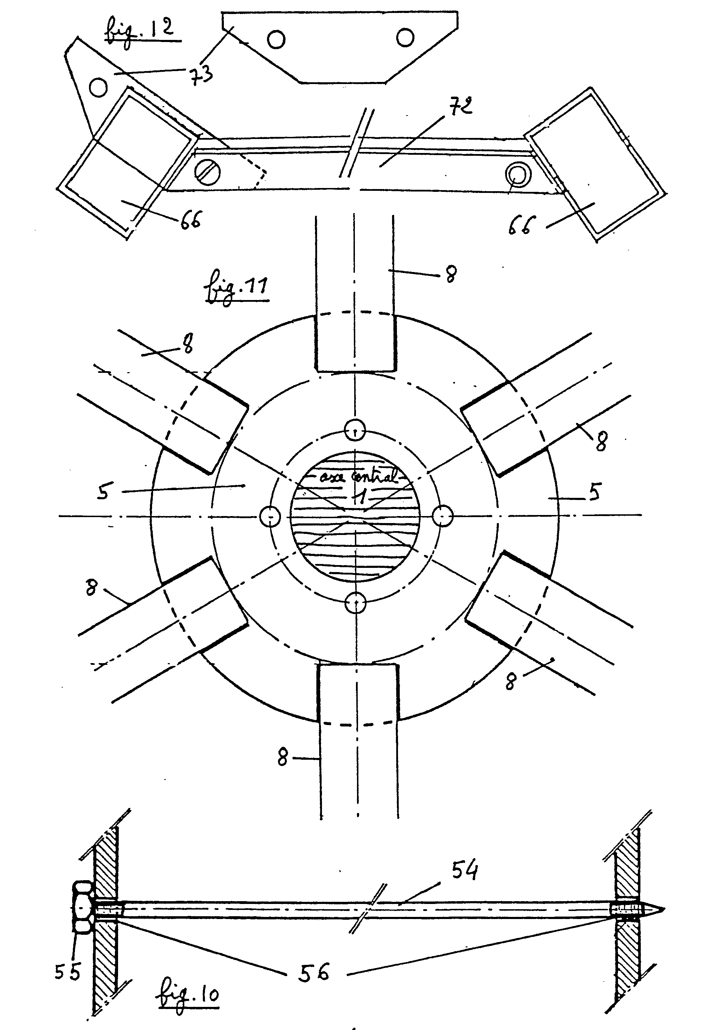

Les tubes carrés creux mobiles 9, qui coulissent dans les tubes fixes 8 sont fixés sur le support-broche ou cylindre 10 soit directement dans les cas de bras rigides (Fig. 4) soit, dans le cas d'une articulation, par l'intermédiaire d'un étrier 26 (Fig. 2) et ayant deux points d'articulation 23, 28 avec la support-broche.

Du côté d-un de ces points 28 s'effectuera le réglage de l'inclinaison du cylindre et, par suite, de la broche; ce réglage s'opère au moyen d'un demi-croissant 30 réalisé dans une face de l'étrier, un boulon fixé sur le support-broche 10 avec un papillon de serrage et servant en plus de butée afin d'éviter les accidents si la broche basculait (Fig. 3).

L'alimentation électrique a posé de nombreuses difficultés qui ont été résolues notamment par les moyens ci-dessous: venant du dessous du grand bac métallique de base 14, et après être passée par un contacteur à bagues 16, l'alimentation électrique, convenablement isolée, passe par le centre creux de l'axe central 1, les dominos, les tubes creux 8, 9 pour arriver au cylindre support-broche; si le bras est rigide (Fig. 4) l'alimentation passe directement du tube creux mobile 9 au cylindre 10 et au point de fixation 22, si le bras est articulé (Fig. 2 et 3), l'aliminentation passe par un tube extérieur 31 qui s'insère par exemple sur un boulon borgne 23 servant en même temps d'articulation (grâce à une tige vissée) et, à l'autre bout, dans le tube 9, ledit point d'articulation étant l'endroit où il y aura la torsion minimum lors d'une inclinaison. Ainsi l'alimentation électrique passera tout en étant protégée du feu, des cendres, des graisses et d'une torsion trop forte, arrivera dans le cylindre support-broche 10 à un moteur 39 d'entrainement des broches par un interrupteur 35.

Dans toutes les énumérations précédentes, il est indispensable que les tubes télescopiques 8 et 9 aient leur intérieur libre de toutes aspérités tels que boulons, butées, etc... pour éviter que les fils électriques, par exemple extensibles, ne soient endommagés ou cisaillés ou perturbés dans leur mouvement dû à l'effet télescopique des tubes 8 et 9. A cet effet deux butées sont indispensables; l'une pour empêcher que le tube coulissant 9 ne sorte du tube 8 au cas où l'on tire la broche et son support vers l'extérieur; pour cela und tige 32 sera soudée sur le support-broche (Fig. 4) ou sur l'étrier 26 (Fig. 2); cette tige passera par un anneau 25 et sera terminée par exemple par un boulon règlable 24 qui fera butée règlable. L'autre butée, pour le cas contraire où l'on pousse la broche et son support, est placée sur le tube 9 en 27, ce qui empêchera de cisailler les fils d'alimentation et d'écraser le tube 31 (Fig. 2).

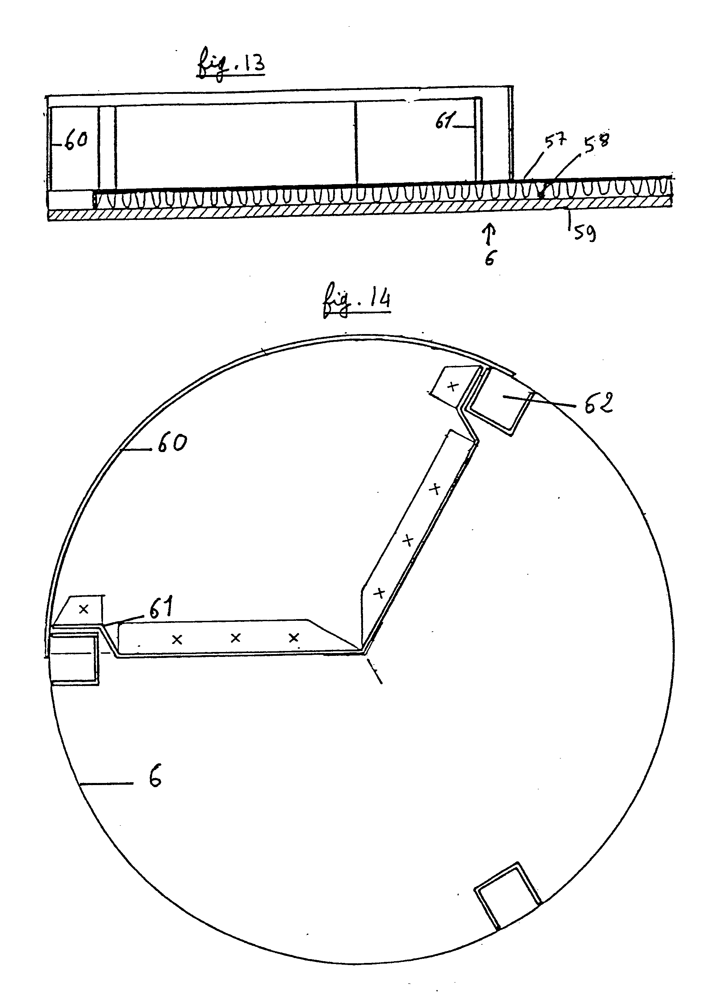

Le support-broche (Fig. 5) est composé par exemple d'un cylindre 10 creux hermétiquement bouché à son extrémité supérieure par un disque 33 (évidemment une pièce emboutie pourrait aussi convenir); à son extrémité inférieure, un disque 34 perforé amovible protège le moteur 39, permet son aération et supporte l'interrupteur 35 protégé des cendres et des graisses pouvant couler. Un fer plat 36 troué en 37 dans le même axe que le trou du disque supéreur 33 permet le passage d'un arbre 38 d'entrainement des broches et son maintien à la verticale. Le moteur 39 est fixé par des pattes soit au cylindre 10 soit au fer plat 36 de manière que son arbre 40 soit en alignement avec l'arbre 38 dans sa partie inférieure; l'entrainement dudit arbre 38 est réalisé soit par une simple goupille avec du jeu pour éviter les torsions dans le cas où le cylindre 10 est coupé en 41 (sa partie inférieure devenant amovible ce qui permet l'accès facile pour le montage ou les réparations), soit par un trou 42 avec un méplat en relation avec un méplat de l'axe du moteur 39, d'une manière flottante de manière que le moteur ne supporte aucune force axiale ou latérale, dans le cas où le cylindre n'est pas coupé.

Un épaulement 43 faisant corps avec l'arbre 38 est placé de manière que le poids des broches et des pièces de viande soit supporté à la partie supérieure du support-broche par le disque 33 et n'exerce aucune force sur le moteur 39. La broche munie d'un manchon creux coulissera ainsi dans l'arbre 38 et s'appuiera sur une tige 44 traversant l'arbre 38 transversalement et servira de butée et assurera l'entrainement de la broche. Une goupille placée en 45 évitera que l'axe puisse être tiré vers le haut dans le cas où une broche y adhèrerait. Cet ensemble ainsi décrit du support-broche et tubes coulissant a solutionné les problèmes de graisses, cendres, court-circuit électrique, aération du moteur, fonctionnement sans effort du moteur 39.

Un support 50 avec un croissillon est fixé sur le cylindre 10, 11 permet le maintien d'un lèchefrite 51 amovible, par exemple en forme de poêle, sous le cylindre 10 à une distance convenable pour ne pas gêner l'aération du moteur 39. Afin déviter que les graisses puissant dé border lorsque les broches et leur cylindre 10 s'inclinent, le montage s'effectue en 49 et 52 de manière à rendre oscillant le support 50 avec le même procédé indiqué en 29, 30 sur la figure 3. D'autre part la graisse recueillie dans le récipient 51 sera protégée des escarbilles de braise venant du foyer 7 par le cylindre 10 (Fig. 6).

Pour des questions d'hygiène et d'ordre pratique, l'accouplement de broches 46 avec l'arbre 38 doit être effectué de telle sorte que les cendres ou les graisses ne puissent s'accumuler; c'est pourquoi la partie de l'accouplement côté broche 46 sera femelle et celle côté arbre 38 sera mâle. En pratique l'accouplement est réalisé par l'intermédiaire d'un tube creux 46 (Fig. 7 et 8) venant se ficher sur l'axe 38 et comportant une encoche 53 venant chevaucher la tige 44 de l'arbre 38 de manière à permettre un débrayage encoche 53/tige 44, ce qui évite, au cas où l'utilisateur tourne la broche à l'envers du sens giratoire du moteur 39, de détériorer les engrenages du réducteur de vitesse. Cet accouplement débrayable est placé de chaque côté des broches (en 46, 47, 48) pour en permettre l'inversion. En ce qui concerne plus spécialement les broches-pics de la Figure 8, pour pouvoir embrocher les pièces de viande, cet accouplement débrayable devient amovible et se trouve simplement maintenu par un boulon-serreur à papillon.

Les aiguilles 54 utilisées sur des broches rectangulaires 54 ne doivent pas bloquer le moteur 39 en touchant les parois verticales du foyer 7; pour cela on a muni une des extrémités de l'aiguille d'une rondelle plate 55; de plus pour que l'aiguille ne puisse glisser dans l'autre sens et se décrocher, on a creusé de petites gorges 56 dans l'aiguille aux endroits où elle traverse les parois de la broche rectangulaire.

En ce qui concerne le plateau horizontal rotatif 6 (Fig. 13) qui supporte le foyer et afin de réduire au maximum la transmission par conductibilité de la chaleur, on insère une matière isolante 58 entre deux plaques métalliques 57, 59; l'un desdits plateaux ayant un rebord de manière que la matière isolante soit encastrée à l'intérieur et soit non visible; ceci protège notamment le circuit électrique arrivant par l'axe central 1 creux vers les relais constitués par le ou les dominos en porcelaine soutenus par une plaquette fixée elle-même sur la plaque 59 du dessous du plateau horizontal 6.

Entre des pieds 74 du foyer 7, par conséquent sous la grille horizontale du foyer est posés sur la plaque 57 du plateau 6 sont insérés des cendriers 18 répartis de sorte qu'ils ne butent pas sur les pieds du foyer, lesdits pieds ayant une hauteur qui est fonction de la profondeur des cendriers, ces dimensions étant elle-même fonction de la quantité de cendres tombant du foyer. Ces cendriers sont conçus de sortent qu'ils servent en même temps d'isolant, en laissant une couche d'air au-dessous, et de régulateur de l'arrivée d'air parvenant sous le foyer; ainsi l'intensité du feu peut être contrôlée, la cuisson réglée permettant ainsi une économie d'énergie. En effet, en les reculant plus ou moins de quelques millimètres, on ouvre ou l'on ferme l'espace par où l'air arrive grâce aux rebords plus élevés en 60 que ceux en 61. De plus, comme il y a au moins trois pieds dans le foyer, il existe aussi trois cendriers pouvant ainsi réaliser un réglage indépendant, si l'on souhaite par exemple cuire un morceau de viande sur une broche plus intensément que celui se trouvant sur une autre broche. On peut d'ailleurs aussi incliner les rebords extérieurs des cendriers vers l'intérieur pour empêcher les graisses d'y couler et de provoquer des flammes. Par la même occasion, cette inclinaison servira de déflecteur. Le point technique important est le suivant: il est nécessaire que les barreaux verticaux du foyer 7, le borde externe des cendriers 18, le plateau horizontal 6 soient, à quelques millimètres près, en ligne droite pour éviter qu'une broche ne s'accroche sur un dépassement quelconque.

Les pieds 13 ou le tronc de cône ou de pyramide 15 (Fig. 1) sont fixés sur un grand bac métallique 14 à double rebord 63, 64 permettant de ce fait à la cheminée cinétique d'être portative et transportable puisqu'il n'y a pas de travaux de maçonnerie.

Des piliers télescopiques amovibles et facultatifs 65, 66 sont fixés sur le bac métallique, ce qui apporte une série d'avantages. On peut suspendre une crèmaillère 67 sur le foyer 7 pour faire de la cuisine; on peut adapter une hotte 68, et éventuellement une double hotte 71 (Fig. 9), pour évacuer les fumées et odeurs si la cheminée se trouve à l'intérieur d'une habitation; on peut aussi insérer des panneaux 70 en verre ou en métal avec un isolant au cas où l'on appuie la cheminée contre une paroi. La régulation du chauffage de l'ambiance environnante s'effectue notamment par les moyens suivants: les panneaux 70 sont à ouverture règlable pour au moins l'un d'entre eux; par la même occasion ils servent de porte d'accès à l'intérieur de la structure. La deuxième hotte 71 placée sur la première, avec ou sans isolant supplémentaire, est articulée par un jeu de double coquilles glissant l'une sur l'autre et permettant de recouvrir partiellement ou totalement la première hotte 68 chauffée par le feu directement sous elle; de plus un clapet de règlage peut être ajouté en 69 et relié à un thermostat d'ambiance.

La régulation du tirage peut être réalisée par l'un quelconque ou l'ensemble des moyens suivants: variation de la hauteur de l'âtre 7 par le mouvement télescopique des pieds 13 ou tronc 15; variation de la hauteur de la hotte par rapport à la base 14, donc à l'âtre, par le mouvement télescopique des piliers 65 et 66; d'autres pieds télescopiques pouvant être aussi fixés sous le bac 14. La ventilation et le refroidissement s'effectuent, pour les tubes coulissant 8 et 9, par une aération du au fait qu'ils sont pris entre les deux plateaux 5 et 6 de sorte qu'il y ait des espaces libres entre eux comme indiqué Figure 11, les fils électriques qui transitent vers eux et à travers eux ainsi que les dominos relais éventuels, étant de ce fait refroidis. De plus, les tubes 8 sont fixés sous le plateau 6 par l'intermédiaire de cales de sorte qu'il y ait une couche d'air entre eux et ledit plateau sur la majeure partie de leur surface en regard.

Le bac métallique à double rebord 14 a plusieurs fonctions pour la ventilation et le tirage. Son rebord inférieur 64, outre qu'il permet le passage et la protection de l'alimentation électrique sous la tôle 14 par les tubes plats la soutenant, procure l'air frais par la même ouverture 19 amenant l'alimentation électrique à l'axe central creux 1, à son moteur 17 et à tous les composants à l'intérieur du cône 15, l'accession de l'air s'opérant par des trous situés dans ce rebord 64. De plus, dans le cas où il y aurait une prise d'air venant de l'extérieur, ce même circuit servira simultanément au tirage de la cheminée et à son règlage par obturation partielle de trous 20 de sortie d'air situés dans la partie supérieure du tronc de cône 15. Le rebord supérieur 63, outre sa fonction de rétention des escarbilles provenant du foyer 7 dans un but de sécurité, permet en quelque sorte de ventiler les moteurs 39 à travers la plaque perforée 34 située sous le cylindre 10; lesdits rebords agissant comme déflecteurs ou volets règlables.

Les problèmes de dilatation des panneaux 70 (Fig. 9), notamment lorsqu'il s'agit de verre, sont résolus en appuyant leur partie inférieure et supérieure sur de simples cornières 72 fixées sur les piliers 66 (Fig. 12); les parties latérales desdits panneaux s'appuyant sur les piliers 66 notamment lorsque les piliers sont rectangulaires; en effet, n'étant pas parallèlles, les panneaux en verre peuvent se dilater sans risquer de se briser; de plus ils sont maintenus en place par des languettes métalliques élastiques amovibles, comme indiqué Figure 12. Du fait du non-ajustage des panneaux, un léger courant d'air circule vers la dépression intérieure et empêche les fumées de sortir. Pour permettre le transport des grands modèles pouvant mesurer plus de 280 cm de haut et 230 cm de diamètre, les cornières 72, supérieures et inférieures, sont rendues démontables grâce à des consoles 73 glissées dans des rainures faites dans les piliers 66; les cornières sont alors fixées sur ces consoles avec des vis par exemple plates de manière à ne pas casser les vitres.

Conformément à une variante de l'invention, la cheminée peut être rapidement transformable en un mobile couleur à usage uniquement décoratif et spectaculaire, formant un ensemble décoratif cinétique grâce aux moyens suivants. A la place des broches et par le même procédé d'accouplement, on place des cylindres à facettes multiples réfléchissantes, par exemple des petits miroirs ou un métal poli et réfléchissant à facettes, lesdits cylindres étant actionnés par les mêmes moteurs des support-broches 10. A la place du foyer une structure sphérique, pyramidale ou cylindrique, réfléchissante comme les cylindres ci-dessus mentionnés et équipée d'un jeu de lampes de différentes couleurs insérées éventuellement dans des encoignures appropriées dont l'intensité est variable; cette structure centrale réfléchissante pouvant tourner dans le sens contraire des cylindres précédents, ou dans le sens contraire du plateau 6, par le truchement d'un autre moteur placé sur le plateau 6.

A l'intérieur du foyer 7, on peut placer un cône 75 ou une forme pyramidale en métal de manière à ce que ledit cône ne dépasse pas le haut des barreaux du foyer, afin de réaliser des économies d'énergie; en effet ledit cône étant plus large en bas qu'en haut, le combustible descend de ce fait à mesure qu'il se consomme dans le bas du foyer.

Pour éviter un refoulement des fumées, une collerette légèrement inclinée vers le haut peut être fixé sur le périmètre intérieur à la base 76 de la hotte 68.

## Revendications

1. Cheminée pouvant servir de rôtisserie du type à broches multiples verticales comprenant: un foyer (7) porté par un plateau (6) horizontal rotatif, le plateau (6) étant solidaire d'un axe (1) central disposé verticalement et pouvant être entrainé par un moteur (17), un socle (13) portant à rotation ledit plateau par l'intermédiaire d'un manchon (11), des bras (8, 9) disposés radialement sur le plateau (6), et portant chacun, à leur extrêmité libre, un moteur pour l'entraînement en rotation des broches caractérisée en ce que: le plateau horizontal (6) est constitué par deux plaques métalliques (57, 59) emprisonnant une matière isolante (58), les bras (8, 9) étant solidaires de la plaque inférieure, la plaque supérieure recevant le foyer (7), l'alimentation en courant électrique des moteurs (39) d'entrainement des broches, se faisant au moyen de fils passant à travers les bras (8, 9) constitués par des tubes creux, le socle (13) reposant sur un bac (14) métallique protégeant l'alimentation électrique et comportant une ouverture (19) amenant l'alimentation électrique au moteur (17) actionnant l'axe central et à l'axe (1) central lui même par l'intermédiare d'un contacteur à bagues (16).

2. Cheminée selon la revendication (1) caractérisée en ce que des piliers (65, 66) télescopiques sont disposées autour du foyer, lesdits piliers servant d'une part à supporter une hotte centrale (68) et d'autre part des panneaux (70) en verre, à ouverture règlable.

3. Cheminée selon la revendication (1) ou 2 caractérisée en ce que le bac (14) est coudé à ses extrêmités formant ainsi des rebords verticaux (63) pouvant être solidaires des piliers télescopiques (65, 66).

4. Cheminée selon l'une quelconque des revendications 1 à 3 caractérisée en ce que les piliers télescopiques (65, 66) sont constitués par des tubes carrés disposés de façon angulaire les uns par rapport aux autres pour recevoir en appui latéral des panneaux de verre (70) lesquels coulissent ou s'emboîtent dans des cornières inférieures et supérieures (72) reliées aux piliers par des consoles démontables.

5. Cheminée selon l'une quelconque des revendications 1 à 4 caractérisée en ce que le socle (13) présente une forme de tronc de cône muni de perforations (20) permettant le passage de l'air pour le tirage de la cheminée, l'air arrivant par un rebord inférieur (64) du bac (14), ledit rebord (64) présentant des trous, l'aire passant ensuite par l'ouverture (19) assurant le passage des câbles électriques sous le socle (13).

6. Cheminée selon l'une qulconque des revendications 2 à 5 caractérisée en ce que les piliers (65, 66) supportent une deuxième hotte (71) articulée par un jeu de double coquilles glissant l'une sur l'autre et permettant de recouvrir partiellement ou totalement la première hotte (68).

7. Cheminée selon l'une quelconque des revendications 1 à 6 caractérisée en ce qu'à l'extrémité libre des bras (8, 9) est disposé un cylindre (10) d'axe vertical constituant une enceinte fermée à sa partie inférieure et supérieure par respectivement deux disques (34, 33), le moteur (39) étant placé dans la partie inférieure du cylindre et aux-dessus du disque (34), l'arbre (40) d'entrainement du moteur étant accouplé de manière flottante à l'extrémité inférieure d'un arbre (38) d'entrainement de broches, l'arbre (38), reposant sur le disque supérieur (33), par l'intermédiaire d'un épaulement (43), sur la partie supérieure extérieure au cylindre (10) dudit arbre venant se ficher, un tube creux (46, 47, 48) présentant à son extrémité inférieure une encoche (53) venant chevaucher une tige (44) d'entrainement traversant l'arbre transversalement, le tube creux étant relié aux broches (54), l'encoche (53) étant telle qu'elle assure un débrayage automatique par rapport à la tige (44) en cas d'effort contrarié par rapport au sens de rotation de l'arbre moteur.

8. Cheminée selon la revendication 7 caractérisée en ce qu'un tel tube creux (46, 47, 48) est disposé de chaque côté des broches pour en permettre indifféremment, l'entrainement par chacune par chacune de ses extrémités.

9. Cheminée selon l'une quelconque des revendications 7 ou 8 caractérisée en ce que chacun des bras (8, 9) est télescopique et est constitué par un tube (9) coulissant dans un tube (8) fixé au plateau (6), le cylindre (10) étant relié au tube coulissant (9) par l'intermédiaire d'un étrier (26) autorisant le pivotement dudit cylindre autour d'un axe horizontal (23, 28), lequel pivotement est limité au moyen d'un boulon muni d'un papillon, le boulon étant fixé au cylindre et se déplaçant dans une échancrure (30) en forme d'arc de cercle prévue sur une branche de l'étrier, le mouvement de translation du tube (9) étant limité par une butée (24) disposée à l'extrémité libre d'une tige (32) soudée sur l'étrier (26), ladite tige s'étendant parallèlement à l'axe des tubes (8, 9), la butée pouvant venir en appui contre un anneau (25) à travers lequel passe la tige (32), ledit anneau étant solidaire du tube fixe (8).

10. Cheminée selon l'une quelconque des revendications 1 à 9 caractérisée en ce qu'elle est utilisée comme ensemble décoratif cinétique, les éléments rotatifs tels que le plateau (6) et le cylindre (10), porte-broche étant munis de structures réfléchissant la lumière.

**Patentansprüche**

1. Kamin, verwendbar als Grillgerät mit mehreren senkrechten Speßen, bestehend aus: einer Feuerstelle (7), getragen von einer waagrechten Drehscheibe (6), die mit einer senkrecht angebrachten Mittelachse (1) verbunden ist, und von einem Motor (17) angetrieben werden kann; einem Sockel (13), der die Scheibe durch eine Walze (11) in Drehung versetzt; strahlenförmig auf der Drehscheibe (6) angebrachten Armen (8, 9) von denen jeder an seinem freien Ende einen Motor hat, um die Spieße zum Rotieren zu bringen, Kennzeichen: die waagrechte Drehscheibe (6) besteht aus zwei Metallplatten (57, 59), mit Isoliermaterial (58) in der Mitte, die Arme (8, 9) sind mit der unteren Platte verbunden, die obere Platte dient als Feuerstelle (7) die elektrische Versorgung der Motoren (39) der Spieße erfolge durch Kabel, die innerhalb der aus Röhren bestehenden Arme (8, 9) laufen; der Sockel (13) ruht auf einem Metallbehälter (14) zum Schutz der elektrischen Versorgung und hat eine Öffnung (19), die die elektrische Versorgung durch einen Ringschalter (16) zum Motor (17) der Mittelachse und zur Mittelachse (1) selbst bringt.

2. Kamin nach dem Anspruch 1 mit folgenden Kennzeichen: ausziehbare Pfeiler (65, 66) sind um die Feuerstelle herum gruppiert; sie tragen einerseits einen zentralen Rauchfang (68) und andererseits verschiebbare Glasscheiben (70).

3. Kamin nach dem Anspruch 1 oder 2 mit folgenden Kennzeichen: der Metallbehälter (14) hat aufgebogene Kanten, aus denen sich senkrechte Ränder (63) ergeben, die mit den ausziehbaren Pfeilern (65, 66) verbunden werden können.

4. Kamin nach einem der Ansprüche 1 bis 3 mit folgenden Kennzeichen: die auszeihbaren Pfeiler (65, 66) bestehen aus viereckigen, jeweils übereck zueinander stehenden Röhren, um als seitlicher Halt für die Glasscheiben (70) zu dienen, die in untere und obere Winkel (72) gleiten oder sich einfügen, welche durch abnehmbare Leisten mit den Pfeilern verbunden sind.

5. Kamin nach einem der Ansprüche 1 bis 4 mit folgenden Kennzeichen: der Sockel (13) hat die Forme eines Kegelstumpfs mit Perforierungen (20) zur Belüftung für den Zug des Kamins. Die Luft kommt über den durchlöcherten unteren Rand (64) des Metallbehälters (14) herein und geht dann durch die Öffnung (19), die die elektrischen Kabel unter den Sockel (13) leitet.

6. Kamin nach einem der Ansprüche 2 bis 5 mit folgenden Kennzeichen: die Pfeiler (65, 66) tragen einen zweiten Rauchfang (71), gegliedert durch eine Anzahl doppelter Klappen, die übereinandergleiten, und die teilweise oder völlige Abdeckung des ersten Rauchfangs (68) erlauben.

7. Kamin nach einem der Ansprüche 1 bis 6 mit folgenden Kennzeichen: am freien Ende der Arme (8, 9) ist ein senkrecht stehender Zylinder (10) angebracht, oben und unten durch jeweils eine Scheibe (33, 34) geschlossen. Der Motor (39) ist im unteren Teil des Zylinders, und oberhalb der Scheibe (34) angebracht, die Antreibswelle (40) des Motors ist schwebend mit dem unteren Ende einer Spieß-Antriebswelle (38) verbunden, die Antriebswelle (38) ruht durch Widerlager (43) auf der oberen Scheibe (33). Auf dem oberen äußeren Teil des Zylinders (10) der besagten Antriebswelle steckt eine Röhre (46, 47, 48) mit einer Nute (53) am unteren Ende, die in einen Bolzen (44) eingreift, der die Antriebswelle durchquert. Die Röhre ist mit den Spießen (54) verbunden, die Nute (53) dergestalt, daß sie eine automatische Auskuppelung des Bolzens (44) garantiert, falls eine der Drehrichtung der Motorantriebswelle entgegengesetzte Kraft einwirkt.

8. Kamin nach Anspruch 7, gekennzeichnet dadurch, daß eine solche Röhre (46, 47, 48) auf jeder Seite der Spieße angebracht ist, um deren Antrieb durch sowohl das eine wie das andere Ende zu erlauben.

9. Kamin nach einem der Ansprüche 7 oder 8 mit folgenden Kennzeichen jeder Arm (8, 9) ist ausziehbar, und besteht aus einer Röhre (9), die in einer an der Drehscheibe (6) angebrachten Röhre (8) gleitet. Der Zylinder (10) ist mit der gleitenden Röhre (9) durch einen Bügel (26) verbunden, der das Schwenken des besagten Zylinders um eine waagrechte Achse (23, 28) erlaubt. Dieses Schwenken wird aufgehalten durch eine Flügelschraube, die am Zylinder fixiert ist, und sich in einer halbkreisförmigen Raste (30) bewegt, die an einer Seite des Bügels vorgesehen ist. Die Verscheibungsbewegung der Röhre (9) wird durch einen Anschlag (24) beschränkt, der am freien Ende eines auf den Bügel (26) geschweißten Dorns (32) angebracht ist. Dieser Dorn liegt parallel zur Achse der Röhren (8, 9). Der Anschlag kann von einem Ring (25) gehalten werden, durch den der Dorn (32) geht. Besagter Ring ist an der feststehenden Röhre (8) angebracht.

10. Kamin nach einem der Ansprüche 1 bis 9, gekennzeichnet dadurch, daß er als dekorative kinetische Einheit verwendet wird, da die drehbaren Teile, wie die Drehscheibe (6) und der Spießhalter-Zylinder (10) mit lichtreflektierenden Strukturen versehen sind.

**Claims**

1. Fireplace that may be used as a rotisserie of the type with multiple vertical spits, comprising: a hearth (7) carried by a horizontal rotating sheet (6), the sheet (6) being integral with a vertically positioned central axis (1) and so designed that it may be driven by a motor (17), a base (13) which causes the said sheet to rotate by means of a sleeve (11), arms (8, 9) radially positioned on the sheet (6) and each bearing at their free end a motor for driving the spits round such that: the horizontal sheet (6) is made up of two metallic plates (57, 59) enclosing insulating material (58), the arms (8, 9) being integral with the lower plate, the upper plate holding the hearth (7), the electricity supply for the motors (39) that drive the spits being provided by means of wires passing through the arms (8, 9) made up of hollow tubes, the base (13) resting on a metallic container (14) that protects the electricity supply and comprises an opening (19) bringing the electricity supply to the motor (17) which drives the central axis and to the central axis (1) itself by means of a slip ring contactor (16).

2. Fireplace as in claim (1) such that telescopic columns (65, 66) are placed around the hearth, the columns serving to support on the one hand and central hood (68) and on the other hand adjustable glass panels (70).

3. Fireplace as in claims (1) or (2) such that the container (14) is bent at its extremities thus forming vertical flanges (63) that can be integral with the telescopic columns (65, 66).

4. Fireplace as in any of claims (1) to (3) such that the telescopic columns (65, 66) are made up of square tubes angularly positioned in relation to one another so as to hold glass panels (70) that rest on them sideways; the panels slide or fit into lower and upper angle irons (72) connected to the columns by removable brackets.

5. Fireplace as in any of claims (1) to (4) such that the base (13) is in the form of a truncated cone fitted with perforations (20) through which air can pass for the draft of the fireplace, the air arriving via a lower rim (64) of the container (14), the rim (64) having holes in it, and the air then passing through the aperture (19) for the electric cables to go under the base (13).

6. Fireplace as in any of claims (2) to (5) such that the columns (65, 66) support a second hood (71) articulated by a set of double shells sliding one over the other and such that the first hood (68) may be partially or wholly covered.

7. Fireplace as in any of claims (1) to (6) such that a cylinder (10) on a vertical axis is placed at the free end of the arms (8, 9), forming an enclosed space shut off both at the bottom and at the top by a disc (34, 33), the motor (39) being placed in the lower part of the cylinder and above the disc (34), the drive shaft (40) of the motor being loosely connected to the lower end of a drive shaft (38) for spits, the shaft (38) resting on the upper disc (33) by means of a shoulder (43), a hollow tube (46, 47, 48) being fixed to the upper part outside the cylinder (10) of the said shaft, the tube having a notch (53) at its lower extremity which drops over a transmission rod (44) crossing the shaft transversely, the hollow tube being connected to the spits (54), the notch (53) being designed so as to ensure automatic disengagement with respect to the rod (44) in the event of stress being exerted in the opposite direction to that in which the driving shaft rotates.

8. Fireplace as in claim (7) such that a hollow tube (46, 47, 48) of this kind is placed on each side of the spits so that they may be driven indiscriminately by each of its extremities.

9. Fireplace as in either of claims (7) or (8) such that each of the arms (8, 9) is telescopic and is made up of a sliding tube (9) in a tube (8) fixed to the sheet (6), the cylinder (10) being attached to the sliding tube (9) by a stirrup (26) enabling the said cylinder to pivot around a horizontal axis (23, 28), its motion being restricted by means of a bolt fitted with a wing nut, the bolt being fixed to the cylinder and moving within a groove (30) shaped like the arc of a circle provided on one side of the stirrup, the movement of translation of the tube (9) being limited by a stop (24) placed at the free end of a rod (32) soldered to the stirrup (26), this rod running parallel to the axis of the tubes (8, 9), the stop being able to rest against a ring (25) through which the rod (32) passes, the said ring being integral with the fixed tube (8).

10. Fireplace as in any of claims (1) to (9) such that it is used as a decorative revolving assembly, the rotating elements such as the sheet (6) and the spit support cylinder (10) being equipped with structures that reflect light.

0 017 522

Fig 1

**0017 522**

fig. 5

fig. 2

fig. 3

fig. 4

x moteur.3g-

2

**0017522**

fig. 7

fig. 6

x 51

50

fig. 8

fig. 9

3

**0 017 522**

fig. 12

73

72

66

66

fig. 11

8

8

8

5

5

axa central

1

8

8

8

54

56

55

fig. 10

4

0 017 522

_fig.13_

60    61    57  58

↑
6                     59

_fig.14_

60

62

61

6